# EUROPÄISCHE PATENTSCHRIFT

(11) **EP 4 360 590 B1**
(45) Veröffentlichungstag und Bekanntmachung des Hinweises auf die Patenterteilung: **16.07.2025**
(21) Anmeldenummer: 23205456.9
(22) Anmeldetag: 24.10.2023
(51) Int. Cl.: A61C 19/00, A61C 19/02

(54) **VERFAHREN ZUR VERPACKUNG DENTALER BAUTEILE, INSBESONDERE KÜNSTLICHER ZÄHNE**
METHOD FOR PACKAGING DENTAL COMPONENTS, IN PARTICULAR ARTIFICIAL TEETH
PROCÉDÉ D'EMBALLAGE DE COMPOSANTS DENTAIRES, EN PARTICULIER DE DENTS ARTIFICIELLES

(30) Priorität: 27.10.2022 DE 102022128535
(43) Veröffentlichungstag der Anmeldung: 01.05.2024
(73) Patentinhaber: Kulzer GmbH, 63450 Hanau (DE)
(72) Erfinder: Stange, Frank-Uwe, 88085 Langenargen (DE); Möller, Matthias, 88097 Eriskirch (DE); Gall, Silke, 63755 Alzenau (DE)
(74) Vertreter: Pelster Behrends Patentanwälte PartG mbB

(56) Entgegenhaltungen:
- DE-U1- 8 217 131
- JP-A- 2012 050 478
- US-A- 5 199 567

## Beschreibung

### Beschreibung

Die Erfindung betrifft ein Verfahren zur Verpackung dentaler Bauteile, insbesondere künstlicher Zähne. Offenbart wird zudem ein mit diesem Verfahren herstellbares Verpackungssystem.

Der Bereich der Dentaltechnik und damit insbesondere der Tätigkeitsbereich von Zahntechnikern ist regelmäßig durch den Umgang mit einer breiten Palette an dentalen Bauteilen geprägt, welche in vielen Fällen relativ klein sind und zumeist eine sehr gewissenhafte Handhabung erfordern. Da viele dieser dentalen Bauteile zudem hochwertige und präzise gefertigte Produkte sind, besteht im Bereich der Technik ein steter Bedarf an leistungsfähigen Verpackungen für solche dentalen Bauteile, die eine sichere Lagerung und Transport der dentalen Bauteile ermöglichen, hinsichtlich der Handhabungseigenschaften gleichzeitig jedoch an die spezifischen Anwendungserfordernisse der Dentaltechnik angepasst sind, die sich in der Praxis ergeben.

Die Anforderungen, die an Verpackungen für dentale Bauteile gestellt werden, lassen sich insbesondere am Beispiel von künstlichen Zähnen gut nachvollziehen. Traditionell werden künstliche Zähne zumeist in Einheiten von sechs oder acht künstlichen Zähnen auf Kunststoffleisten in Verkehr gebracht, auf denen die künstlichen Zähne mit Wachs oder anderen Adhäsivstoffen, welche beispielsweise in der Form von Klebebändern eingesetzt werden können, fixiert sind. Diese Form der Anordnung soll dabei nicht nur die korrekte Zusammenstellung der zusammen in Verkehr gebrachten künstlichen Zähne sicherstellen, sondern gleichzeitig eine gute Zugänglichkeit der künstlichen Zähne gewährleisten, damit der Fachmann diese beispielsweise inspizieren, abnehmen, testen und anschließend wieder auf der Leiste befestigen kann.

Diese traditionelle Form der Handhabung von künstlichen Zähnen genügt hinsichtlich der einfachen Zugänglichkeit der dentalen Bauteile zwar den Bedürfnissen des Fachmannes, wird jedoch regelmäßig hinsichtlich verschiedener Aspekte auch als nachteilig empfunden, insbesondere bei der Handhabung der dentalen Bauteile außerhalb der kontrollierten Umgebung eines Dentallabors, beispielsweise im Zuge der Lagerung oder des Versandes industriell hergestellter dentalen Bauteile durch den Hersteller.

Die Fixierung mit Wachs oder anderen Adhäsivstoffen bedeutet immer auch eine Kontamination der Kontaktflächen der künstlichen Zähne und bedingt regelmäßig eine Notwendigkeit, das dentale Bauteil vor einer weiteren Verarbeitung zu reinigen. Dies stellt einen zusätzlichen Arbeitsschritt da, welcher die Zeit- und Kosteneffizienz vieler Arbeitsverfahren reduziert und wegen der zumeist manuellen Durchführung die Automatisierung und Digitalisierung von Arbeitsprozessen erschwert.

Darüber hinaus kann bei sehr langer und/oder nicht adäquater Lagerung eine permanente Kontamination der dentalen Bauteile durch den Adhäsivstoff erfolgen, was auch als "Einschmelzen" des Zahns in das Trägermaterial bezeichnet wird und was mit einer Gefahr einer unerwünschten Materialverfärbung des dentalen Bauteils verbunden ist. Zudem unterliegen viele der in der Praxis eingesetzten Adhäsivstoffe einem Alterungsprozess, der, insbesondere bei regelmäßiger Entnahme und Wiederanordnung der dentalen Bauteile auf der Kunststoffleiste, eine Verschlechterung der Fixierungsfestigkeit bedingen kann. Durch diesen Alterungsprozess und/oder durch das allgemeine Ansammeln von Staub und Schmutz auf freiliegenden Klebeflächen kann im schlimmsten Fall ein Herabfallen der dentalen Bauteile von der Kunststoffleiste bedingt werden, durch welches beispielsweise ein Teil der dentalen Bauteile verloren gehen oder beschädigt werden können.

Über die nachteiligen Auswirkungen der in herkömmlichen Verpackungssystemen notwendigen Adhäsivstoffe hinaus, wird in den aus dem Stand der Technik bekannten Verpackungssystemen in vielen Fällen auch als nachteilig empfunden, dass die dentalen Bauteile auf den Kunststoffleisten zumeist weitgehend frei liegen und von den Verpackungssystemen nicht oder nur im geringen Umfang gegen Umwelteinflüsse und insbesondere mechanische Belastungen geschützt werden. Hierdurch besteht eine erhöhte Gefahr, dass die dentalen Bauteile beschädigt werden.

Vor dem Hintergrund eines steigenden Bewusstseins im Bereich der Technik für die Notwendigkeit eines nachhaltigen Wirtschaftens, wird bei vielen der aus dem Stand der Technik bekannten Verpackungssysteme zudem als nachteilig empfunden, dass diese zumeist einen relativ hohen Materialbedarf haben und am Ende ihrer Lebenszeit häufig in einem Mischabfall resultieren, welcher beispielsweise neben dem Kunststoff der Kunststoffleiste auch Rückstände des Adhäsivstoffes umfasst und der infolgedessen nur mit relativ hohem Aufwand wiederverwertet werden kann.

Verpackungssysteme für andere Bauteile und Komponenten aus dem dentalen Bereich sind beispielsweise in der US 5199567 A, der DE 8217131 U1 und JP 2012050478 A offenbart.

Die primäre Aufgabe der vorliegenden Erfindung war es, die vorstehend beschriebenen Nachteile des Standes der Technik auszuräumen oder zumindest abzuschwächen.

Insbesondere war es die Aufgabe der vorliegenden Erfindung ein Verfahren zum Verpacken dentaler Bauteile, insbesondere künstlicher Zähne, und ein darauf aufbauendes Verpackungssystem anzugeben, welches eine zeit- und kosteneffiziente Verpackung dentaler Bauteile ermöglicht, die den spezifischen Branchenanforderung beim Umgang mit dentalen Bauteilen Rechnung trägt.

Insoweit war es eine Aufgabe der vorliegenden Erfindung, dass das mit dem anzugebenden Verfahren herstellbare Verpackungssystem eine zuverlässige gleichzeitige Verpackung beziehungsweise Fixierung von mehreren dentalen Bauteilen, insbesondere von für den Front- oder Seitenbereich zusammengestellten künstlichen Zähnen, ermöglichen sollte, durch die eine sichere Lagerung und ein leichter Transport möglich werden, ohne dass die Gefahr von Verlusten an dentalen Bauteilen besteht. Dabei war es wünschenswert, dass das mit dem anzugebenen Verfahren herstellbare Verpackungssystem die darin verpackten dentalen Bauteile zudem möglichst gut gegen Umwelteinflüsse und mechanische Belastungen schützen sollte.

Es war eine wichtige Aufgabe der vorliegenden Erfindung, dass die im anzugebenden Verpackungssystem verpackten dentalen Bauteile möglichst leicht von außen zugänglich sein sollten, wobei es eine Maßgabe war, dass die dentalen Bauteile leicht reversibel und zerstörungsfrei aus dem Verpackungssystem entnommen und dort wieder eingesetzt werden können sollten. Hierbei war insbesondere anstrebenswert, dass der Fachmann von in dem anzugebenden Verpackungssystem angeordneten dentalen Bauteilen einen möglichst unverfälschten visuellen Farbeindruck erhalten können sollte.

Es war eine weitere Aufgabe der vorliegenden Erfindung, dass die sichere Verpackung der dentalen Bauteile in dem anzugebenen Verpackungssystem auch nach langer Lagerung, idealerweise selbst unter ungünstigen Lagerbedingungen, gewährleistet sein sollte.

Zudem war es eine Aufgabe der vorliegenden Erfindung, dass das anzugebende Verpackungssystem das Risiko für Kontaminationen oder ungewollte Verfärbungen der darin verpackten dentalen Bauteile minieren sollte, wobei insbesondere eine unerwünschte Kontamination mit Wachs oder anderen Adhäsivstoffen vermieden werden können sollte.

Es war eine ergänzende Aufgabe der vorliegenden Erfindung, dass das anzugebene Verfahren zur Herstellung des Verpackungssystems einen möglichst niedrigen Ressourcenbedarf erfordern sollte. Darüber hinaus war es wünschenswert, dass das anzugebene Verpackungssystem am Ende der Lebenszeit besonders leicht wieder verwertbar sein sollte, wobei wünschenswerterweise insbesondere kein oder zumindest nur geringe Mengen Mischabfall erzeugt werden sollte.

Die Erfinder der vorliegenden Erfindung haben nunmehr gefunden, dass sich die vorstehend beschriebenen Aufgaben lösen lassen, wenn dentale Bauteile in einem Verpackungsverfahren unter Einsatz von Thermoformen verpackt werden, wie es in den Ansprüchen definiert wird, wobei die dentalen Bauteile so auf einem dreidimensionalen Trägerelement platziert werden, dass sie an zumindest einer Seite über dessen Rand hinaus ragen, sodass ein Umfassungsbereich ausgebildet wird, um welchen herum im Rahmen des Thermoformens ein flächiges Kunststoffhalbzeug geformt werden kann, um an zumindest einer Seite des dentalen Bauteils eine formschlüssige Einfassung des dentalen Bauteils zu erreichen, sodass das dentale Bauteil nach dem Entfernen des Trägerelementes in einer ausgeformten Kunststoffstruktur verpackt ist, aus der es reversibel und zerstörungsfrei entnehmbar ist.

Mit dem erfindungsgemäßen Verfahren ist es beispielsweise möglich, einen zusammengestellten Satz von künstlichen Zähnen mit der Labial-/Bukkalseite nach unten in die als Negativform ausgeführte Auflageoberfläche eines dreidimensionalen Trägerelementes zu setzen und den jeweils oberen und unteren Bereich der Zähne, welcher über den Seitenrand der Auflageoberfläche hinausragt, im Zuge eines Thermoformverfahrens mit einer Kunststofffolie zu umfassen, die in heißer, dehnbarer Form aufgebracht und mit Vakuum beziehungsweise Überdruck um die auf der Auflagefläche liegenden künstlichen Zähne herumgefügt wird, sodass die thermogeformte Kunststofffolie die Zähne nach Abkühlung auch teilweise labial/bukkal umfasst, und diese im Verpackungssystem stabilisiert, sodass die künstlichen Zähne zusammen mit der erstarrten Kunststoffstruktur aus der Thermoform entnommen und von dem Trägerelement separiert werden können.

In einem so hergestellten Verpackungssystem sind die künstlichen Zähne von der Seite, an der zuvor das Trägerelement angeordnet war, freiliegend und für den Fachmann ungehindert sichtbar. In vorteilhafter Weise ist dabei die reversible und zerstörungsfreie Entnahme der künstlichen Zähne aus dem Verpackungssystem möglich, wobei lediglich eine zumeist leichte, im Wesentlichen nicht permanente Deformation der Kunststoffstruktur benötigt wird. Da die künstlichen Zähne zumindest bei beidseitiger labialer/bukkaler Umfassung rein retentiv gehalten werden, treten keine Verschmutzungen oder Verfärbungen durch Adhäsivstoffe auf. Die retentive Fixierung der künstlichen Zähne gewährleistet auch bei langen Lagerzeiten und erhöhten Temperaturen eine sichere Fixierung der künstlichen Zähne.

Durch die teilweise Umfassung der künstlichen Zähne mit einer Kunststoffstruktur werden diese zudem vor zahlreichen Umwelteinflüssen abgeschirmt, wobei die Kunststoffstruktur angesichts des zuverlässigen Sitzes der künstlichen Zähne auch einen vorteilhaften Schutz gegen mechanische Belastungen bietet.

Das mit dem anzugebenen Verfahren hergestellte Verpackungssystem zeichnet sich dabei durch einen insgesamt relativ niedrigen Materialbedarf aus, wobei insbesondere eine Ausbildung des Verpackungssystems aus sortenreinen Kunststoffen und/oder der Verzicht auf Adhäsivstoffe möglich ist, durch die das Anfallen von Mischabfall vermieden werden kann und die Wiederverwertbarkeit entsprechender Kunststoffstrukturen besonders hoch ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verpackungssysteme ergeben sich aus den Merkmalen bevorzugter Verfahren.

Die Erfindung betrifft ein Verfahren zur Verpackung dentaler Bauteile, umfassend die Verfahrensschritte:
a) Herstellen oder Bereitstellen eines dentalen Bauteils,
b) Anordnen des dentalen Bauteils mit einer Auflageseite auf einer Auflageoberfläche eines dreidimensionalen Trägerelements, wobei das Anordnen so erfolgt, dass das dentale Bauteil unter Ausbildung eines Umfassungsbereichs an zumindest einer Seite über den Rand der Auflageoberfläche hinaus ragt,
c) Herstellen oder Bereitstellen eines flächigen Kunststoffhalbzeuges, umfassend einen thermoplastischen Kunststoff,
d) Umformen des flächigen Kunststoffhalbzeuges in einem Thermoformverfahren zur formschlüssigen Umfassung des dentalen Bauteils in einer Kunststoffstruktur, wobei das Umformen so erfolgt, dass das dentale Bauteil im Umfassungsbereich an der Auflageseite des dentalen Bauteils formschlüssig von der Kunststoffstruktur umgeben wird, und
e) Separieren des abschnittsweise von der Kunststoffstruktur umgebenen dentalen Bauteils von dem Trägerelement, zum Erhalt eines Verpackungssystems, wobei das Verpackungssystem das in der Kunststoffstruktur verpackte dentale Bauteil umfasst.

Das erfindungsgemäße Verfahren dient der Verpackung dentaler Bauteile, wobei hierbei ein Verpackungssystem hergestellt wird, welches das verpackte dentale Bauteil umfasst.

Für den Fachmann im Bereich der Dentaltechnik ist der Ausdruck "dentales Bauteil" klar. In Übereinstimmung mit dem fachmännischen Verständnis umfasst der Begriff dabei Bauteile, die für den Einsatz im menschlichen Mund vorgesehen sind, insbesondere die typischen Arten von Zahnersatz, beispielsweise Inlays, Kronen, Brücken, Implantate oder Veneers, bis hin zu Teil- oder Vollprothesen sowie entsprechenden künstlichen Zähnen. Darüber hinaus umfasst der Ausdruck dentale Bauteile jedoch auch Teilelemente dieser für den Einsatz im Mund vorgesehenen Bauteile sowie die bei der Herstellung eingesetzten Ausgangsbauteile, wie beispielsweise Fräsblöcke.

Nach Einschätzung der Erfinder eignet sich das erfindungsgemäße Verfahren insbesondere zur Verpackung von Fräsblöcken, aus denen mittels subtraktiver Fertigungsverfahren komplexere dentale Bauteile erhalten werden können, sowie dentaler Prothesen, künstlicher Zähne und sonstiger dentaler Formkörper, welche beispielsweise subtraktiv aus Fräsblöcken oder additiv mittels 3D-Druck oder ähnlicher Verfahren hergestellt werden können, und bei denen es sich insbesondere um Zahnersatzkomponenten handelt, wie beispielsweise Inlays, Kronen, Brücken, Implantate oder Veneers. Bevorzugt ist somit ein erfindungsgemäßes Verfahren, wobei das dentale Bauteil ausgewählt ist aus der Gruppe bestehend aus Fräsblöcken, dentalen Prothesen, künstlichen Zähnen und dentalen Formkörpern, insbesondere subtraktiv oder additiv gefertigte dentale Formkörper.

Nach Einschätzung der Erfinder entfaltet das erfindungsgemäße Verfahren seine Vorteile insbesondere bei der Verpackung von künstlichen Zähnen, deren Verpackung und Handhabung in der Praxis besonders anspruchsvoll ist und bei dem sich gegenüber den hierfür aus dem Stand der Technik bekannten Lösungen besonders ausgeprägte Vorteile zeigen. Für im Wesentlichen alle Ausführungsformen besonders bevorzugt ist ein erfindungsgemäßes Verfahren, wobei das dentale Bauteil ausgewählt ist aus der Gruppe bestehend aus künstlichen Zähnen.

Das erfindungsgemäße Verfahren ist insbesondere für die Verpackung von dentalen Bauteilen in einem industriellen Herstellungskontext geeignet. Entsprechend ist das erfindungsgemäße Verfahren besonders vorteilhaft, um industriell hergestellte dentale Bauteile zu verpacken, insbesondere im Rahmen eines großtechnischen Herstellungsprozesses hergestellte dentale Bauteile. Ganz besonders bevorzugt ist entsprechend ein erfindungsgemäßes Verfahren, wobei das dentale Bauteil ausgewählt ist aus der Gruppe bestehend aus industriell gefertigten künstlichen Zähnen, wobei der Fachmann in diesem Zusammenhang auch von sogenannten vorkonfektionierten künstlichen Zähnen spricht.

In seiner einfachsten Ausgestaltung dient das erfindungsgemäße Verfahren der Verpackung lediglich eines dentalen Bauteils. In Übereinstimmung mit dem fachmännischen Verständnis wird das erfindungsgemäße Verfahren entsprechend für ein oder mehrere dentale Bauteile durchgeführt. Der Fachmann versteht jedoch, dass sich besonders effiziente Verfahrensführungen erhalten lassen, wenn mit dem erfindungsgemäßen Verfahren zeitgleich mehrere dentale Bauteile gemeinsam verpackt werden, sodass ein Verpackungssystem erhalten wird, welches mehrere dentale Bauteile umfasst. Die gleichzeitige Verpackung von zwei oder mehr dentalen Bauteilen ist dabei vorteilhaft, da hierdurch die Verpackung größerer Mengen dentaler Bauteile in einer zeiteffizienten Weise möglich wird. Zudem ergeben sich bei diesem Vorgehen regelmäßig besonders ressourcenschonende Verfahren. Insbesondere ist es möglich, zwei oder mehr dentale Bauteile, welche beispielsweise für den gleichen Patienten vorgesehen sind, in dem erfindungsgemäßen Verfahren effizient zusammen zu verpacken. Diesem Aspekt kommt insbesondere bei der Verpackung von künstlichen Zähnen eine besondere Bedeutung zu. Künstliche Zähne sollen nämlich regelmäßig in einer Zusammenstellung von mehreren zueinander passenden künstlichen Zähnen arrangiert werden, was mit dem erfindungsgemäßen Verfahren besonders effizient möglich ist. Hierbei kommen insbesondere solchen Verpackungssystemen eine hohe Praxisrelevanz zu, die sechs beziehungsweise acht künstliche Zähne umfassen, da dies der üblichen Zahl an künstlichen Zähnen für den Front- beziehungsweise Seitenzahnbereich entspricht. Bevorzugt ist deshalb ein erfindungsgemäßes Verfahren, wobei das Verfahren gleichzeitig für zwei oder mehr, bevorzugt vier oder mehr, besonders bevorzugt sechs oder mehr, ganz besonders bevorzugt acht oder mehr, insbesondere bevorzugt sechs oder acht, dentale Bauteile durchgeführt wird, wobei das Verpackungssystem zwei oder mehr, bevorzugt vier oder mehr, besonders bevorzugt sechs oder mehr, ganz besonders bevorzugt acht oder mehr, insbesondere bevorzugt sechs oder acht, in der Kunststoffstruktur verpackte dentale Bauteile umfasst.

In dem erfindungsgemäßen Verfahren wird in Verfahrensschritt a) zunächst das zu verpackende dentale Bauteil hergestellt, beispielsweise durch subtraktive Fertigung aus einem Fräsblock oder mittels additiver Fertigung, oder bereitgestellt, beispielsweise im Rahmen der Zusammenstellung einer Anzahl von sechs oder acht zuvor gefertigter künstlicher Zähne.

In Verfahrensschritt b) werden das eine oder die mehreren dentalen Bauteile auf der Auflageoberfläche eines dreidimensionalen Trägerelementes platziert. Im Rahmen der vorliegenden Erfindung wird dabei die Seite der dentalen Bauteile, welche in Richtung des dreidimensionalen Trägerelementes weist, zum Zwecke einer klaren Zuordnung als Auflageseite bezeichnet. Diese Auflageseite wird im nachfolgenden Thermoformverfahren teilweise durch das unterliegende Trägerelement abgeschirmt, sodass sie nicht vollständig von der Kunststoffstruktur umgeben werden kann. Entsprechend wird im hergestellten Verpackungssystem der Teil der Auflageseite der dentalen Bauteile, welcher nach dem Anordnen der dentalen Bauteile auf dem Trägerelement dessen Auflageoberfläche kontaktiert, nicht von der durch Thermoformen erhaltenen Kunststoffstruktur umgeben, sondern bleibt freiliegend. Da für den Fachmann im Fall von künstlichen Zähnen insbesondere die ungehinderte Inspektion der Zahnbereiche wichtig ist, welche beim Einsatz im Mund von außen besonders leicht sichtbar sein werden, schlagen die Erfinder vor, dass im Falle von künstlichen Zähnen die Auflageseite durch die Labial- beziehungsweise Bukkalseite der künstlichen Zähne gebildet werden sollte, sodass diese im resultierenden Verpackungssystem teilweise freiliegen. Bevorzugt ist entsprechend ein erfindungsgemäßes Verfahren, wobei das dentale Bauteil ein künstlicher Zahn ist, wobei die Auflageseite die Labial-/Bukkalseite des künstlichen Zahnes ist.

Der Zweck des dreidimensionalen Trägerelementes ist es, dass die darauf aufliegenden dentalen Bauteile, welche an zumindest einer Seite über den Rand der Aufnahmeoberfläche hinausragen, gegenüber dem umliegenden Boden derart erhöht liegen, dass sie im Rahmen des anschließenden Thermoformverfahrens auch von unten, das heißt von Seiten der Auflageseite, bzw. im Falle von künstlichen Zähnen insbesondere von der Labial- beziehungsweise Bukkalseite, mit dem Kunststoff umfasst werden können. Der Fachmann versteht, dass es bei typischen Thermoformverfahren in Abhängigkeit von den eingesetzten Kunststoffhalbzeugen erschwert sein kann, die dentalen Bauteile auch von unten zu umfassen, wenn zwischen der Auflageseite und dem umgebenden Untergrund zu wenig Platz vorgesehen ist. Entsprechend schlagen die Erfinder vor, dass durch die konstruktive Gestaltung des dreidimensionalen Trägerelements und der umliegenden Bodenbereiche ein gewisser Mindesthöhenunterschied eingestellt werden sollte. Bevorzugt ist insoweit ein erfindungsgemäßes Verfahren, wobei die Auflageoberfläche in Verfahrensschritt d) gegenüber dem umliegenden Untergrund erhöht liegt, wobei der Höhenunterschied bevorzugt 2 mm oder mehr, besonders bevorzugt 5 mm oder mehr, ganz besonders bevorzugt 10 mm oder mehr, beträgt.

Es kann als Vorteil des erfindungsgemäßen Verfahrens gesehen werden, dass an die spezifische Ausgestaltung des dreidimensionalen Trägerelementes nur sehr geringe Anforderungen gestellt werden, sodass dieses beispielsweise aus einer Vielzahl von möglichen Materialien ausgebildet werden kann, und sich die Materialauswahl weitgehend nach den Verfügbarkeiten richten kann.

Hinsichtlich der konstruktiven Ausgestaltung des dreidimensionalen Trägerelementes sehen die Erfinder vor allem zwei Ausgestaltungen als vorteilhaft an. Das dreidimensionale Trägerelement kann zum einen als separater Trägerblock ausgeführt werden, welcher beispielsweise bei Bedarf in die Form der zum Thermoformen verwendeten Vorrichtung eingesetzt werden kann, wenn das erfindungsgemäße Verfahren verwendet werden soll. Dies ist insbesondere vorteilhaft, wenn die vorhandenen Vorrichtungen für das Thermoformen neben dem erfindungsgemäßen Verfahren auch noch für andere Zwecke eingesetzt werden sollen, sodass durch die Verwendung des separaten Trägerelements eine vorteilhafte Umrüstbarkeit erreicht wird. Als insbesondere für großtechnische und industrielle Prozesse geeignete Alternative zu dieser Ausgestaltung erachten die Erfinder eine Ausführungsform, bei der das dreidimensionale Trägerelement unmittelbar durch eine erhabene Trägerstruktur in der Bodenfläche der Thermoform gebildet wird, sodass die entsprechende Thermoform spezifisch für die Durchführung des erfindungsgemäßen Verfahrens ausgelegt ist und einstückig in einer besonders robusten Ausführungsform erhalten werden kann. Bevorzugt ist somit für bestimmte Anwendungen ein erfindungsgemäßes Verfahren, wobei das dreidimensionale Trägerelement ein separater Trägerblock ist, bevorzugt aus Kunststoff, Metall, Zirkonoxid, Keramik oder dentalem Gips. Bevorzugt ist alternativ ein erfindungsgemäßes Verfahren, wobei das dreidimensionale Trägerelement durch eine erhabene Trägerstruktur einer Thermoform gebildet wird.

Um eine präzise Anordnung der dentalen Bauteile auf dem Trägerelement sowie insbesondere auch während des Schrittes des Umformens eine gute Fixierung der dentalen Bauteile auf dem Trägerelement zu befördern, schlagen die Erfinder vor, dass die Auflageoberfläche mit einer makroskopischen Oberflächenstruktur versehen werden kann, die die Anordnung der dentalen Bauteile unterstützt. Dies ist insbesondere dann vorteilhaft, wenn mit dem erfindungsgemäßen Verfahren in zahlreichen sukzessiven Ausführungen stets zumindest teilweise baugleiche dentale Bauteile verpackt werden sollen, wie beispielsweise im Falle der Verpackung von künstlichen Zähnen, bei der in der Praxis zumeist eine Zusammenstellung von sechs oder acht künstlichen Zähnen erfolgen wird, die zumindest hinsichtlich ihrer Grundform immer jeweils ähnlich sind. Bevorzugt ist vor diesem Hintergrund ein erfindungsgemäßes Verfahren, wobei die Auflagefläche eine makroskopische Oberflächenstruktur mit einem oder mehreren Aufnahmeplätzen zur Aufnahme von dentalen Bauteilen umfasst, wobei die Zahl der Aufnahmeplätze bevorzugt der Zahl der im Verfahren gleichzeitig verpackten dentalen Bauteile entspricht.

Nach Einschätzung der Erfinder ist es zumindest in der einfachsten Ausgestaltung des erfindungsgemäßen Verfahrens prinzipiell denkbar, wenn das oder die dentalen Bauteile jeweils nur mit einem Ende an den Seiten über die Aufnahmefläche hinausragen und entsprechend nur an einer Stelle mittels des Thermoformens mit Kunststoff umfasst werden. Je nach der Ausgestaltung des erfindungsgemäßen Verfahrens, insbesondere in Abhängigkeit des Ausmaßes des Umfassungsbereichs, dürften sich nach Einschätzung der Erfinder hierbei jedoch in vielen Fällen Ausgestaltung des Verpackungssystems ergeben, in denen für eine Praxistauglichkeit zumindest noch eine teiladhäsive Befestigung notwendig ist. In solchen Ausgestaltungen kann es entsprechend zweckmäßig sein, die in der Kunststoffstruktur verpackten Bauteile, welche lediglich an einer Seite im Umfassungsbereich an der Auflageseite formschlüssig von der Kunststoffstruktur umgeben sind, zusätzlich mit Wachs oder einem anderen Adhäsivstoff zu fixieren, um ein ungewolltes Herausfallen zu verhindern. Trotz einer teiladhäsiven Befestigung wird das erfindungsgemäße Verfahren auch in dieser einfachen Ausführungsform jedoch insoweit als vorteilhaft angesehen, dass die einseitige Umfassung der dentalen Bauteile in der Kunststoffstruktur einen gewissen Schutz vor Umwelteinflüssen und mechanischer Belastung leistet und zudem der Bedarf an Adhäsivstoffen gegenüber den aus dem Stand der Technik bekannten Lösungen reduziert werden kann.

Angesichts der Aufgabe, den Einsatz von Adhäsivstoffen möglichst weitgehend überflüssig zu machen, erachten es die Erfinder jedoch als für im Wesentlichen alle Ausführungsformen bevorzugt, wenn zumindest eine beidseitige Umfassung der dentalen Bauteile mit der Kunststoffstruktur erreicht wird, sodass eine ausschließlich retentive Fixierung möglich ist. Dies kann erreicht werden, wenn die dentalen Bauteile an zwei Seiten über die Auflageoberfläche hinausragen und entsprechend zwei Umfassungsbereiche ausgebildet werden, die im Rahmen des Thermoformens vom Kunststoffmaterial umfasst werden können, sodass die dentalen Bauteile in den Umfassungsbereichen nach Entfernen des dreidimensionalen Trägerelements an gegenüberliegenden Seiten, beispielsweise oben und unten, allseitig formschlüssig von der Kunststoffstruktur umgeben sind. Besonders bevorzugt ist demgemäß ein erfindungsgemäßes Verfahren, wobei das Anordnen so erfolgt, dass das dentale Bauteil unter Ausbildung eines ersten Umfassungsbereichs an einer ersten Seite und unter Ausbildung eines zweiten Umfassungsbereichs an einer zweiten Seite, bevorzugt an zwei gegenüberliegenden Seiten, über den Rand der Auflageoberfläche hinausragt. Das Umformen erfolgt in diesem Fall entsprechend derart, dass die dentalen Bauteile im ersten Umfassungsbereich und im zweiten Umfassungsbereich an der Auflageseite der dentalen Bauteile formschlüssig von der Kunststoffstruktur umgeben werden.

In Verfahrensschritt c) wird nunmehr das Material bereitgestellt, welches im nachfolgenden Thermoformschritt um die dentalen Bauteile herumgelegt werden soll. Es kann als Vorteil des erfindungsgemäßen Verfahrens gesehen werden, dass es hinsichtlich der hierbei einsetzbaren Materialien sehr flexibel ist, sodass im Prinzip sämtliche flächigen Kunststoffhalbzeuge eingesetzt werden können, die aus dem Stand der Technik als Kunststoffhalbzeuge für Thermoformverfahren bekannt sind. In Übereinstimmung mit dem fachmännischen Verständnis handelt es sich bei flächigen Kunststoffhalbzeugen um Kunststofffolien oder Kunststoffplatten, wobei der Übergang zwischen Folien und Platten letztlich unscharf ist. Mit Blick auf eine möglichst ressourcenschonende Ausführung des erfindungsgemäßen Verfahrens schlagen die Erfinder vor, dass die mittlere Dicke der flächigen Kunststoffhalbzeuge nicht zu hoch gewählt werden sollte, um den Materialbedarf zu minimieren und auch die zum Thermoformen benötigten Temperaturen möglichst gering halten zu können. Entsprechend sehen die Erfinder solche flächigen Kunststoffhalbzeuge als bevorzugt an, die als Folie bezeichnet werden können. Bevorzugt ist folglich ein erfindungsgemäßes Verfahren, wobei das flächige Kunststoffhalbzeug eine Kunststofffolie ist.

In einer vorteilhaften Ausgestaltung schlagen die Erfinder insoweit vor, dass zum Erhalt optisch besonders ansprechender Verpackungssysteme und/oder zur Umsetzung von notwendigen Kennzeichnungen auch farbige oder bedruckte Kunststoffhalbzeuge eingesetzt werden können. Bevorzugt ist entsprechend ein erfindungsgemäßes Verfahren, wobei das flächige Kunststoffhalbzeug ein eingefärbtes und/oder bedrucktes Kunststoffhalbzeug, besonders bevorzugt ein bedrucktes Kunststoffhalbzeug, ist.

Wie vorstehend erläutert, ist das erfindungsgemäße Verfahren in vorteilhafter Weise mit typischen flächigen Kunststoffhalbzeugen durchführbar, welche der Fachmann als Ausgangsmaterialien für Thermoformverfahren kennt. Auch wenn es prinzipiell denkbar ist, dass entsprechenden Kunststoffhalbzeugen weitere Bestandteile beigemischt sind, beispielsweise Füllstoffe, bestehen entsprechende flächige Kunststoffhalbzeuge in der Praxis zumeist weit überwiegend beziehungsweise nahezu vollständig aus thermoplastischen Kunststoffen, was auch für das erfindungsgemäße Verfahren zweckmäßig ist. Bevorzugt ist entsprechend ein erfindungsgemäßes Verfahren, wobei das flächige Kunststoffhalbzeug zu 90 % oder mehr, bevorzugt zu 95 % oder mehr, besonders bevorzugt zu 98% oder mehr, ganz besonders bevorzugt im Wesentlichen vollständig, aus dem thermoplastischen Kunststoff besteht, bezogen auf die Masse des Kunststoffhalbzeugs. Beispielhaft ist ein erfindungsgemäßes Verfahren, wobei der thermoplastische Kunststoff ausgewählt ist aus der Gruppe bestehend aus Polyvinylchlorid, Polystyrol, Polyestern, Polyolefinen, Acrylnitril-Butadien-Styrol-Copolymeren und Mischungen dieser Kunststoffe, bevorzugt ausgewählt ist aus der Gruppe bestehend aus Polyvinylchlorid, Polystyrol, Polyethylenterephthalat, Polypropylen, Butadien-Styrol-Copolymeren und Mischungen dieser Kunststoffe.

Im Zuge der Entwicklung des erfindungsgemäßen Verfahrens haben die Erfinder erkannt, dass sich vorteilhafterweise besonders nachhaltige Verpackungssysteme erhalten lassen, wenn als thermoplastischer Kunststoff biobasierte oder bioabbaubare thermoplastische Kunststoffe eingesetzt werden, wobei insbesondere solche thermoplastischen Kunststoffe bevorzugt sind, die sowohl biobasiert als auch bioabbaubar sind. Entsprechende Materialien sind dem Fachmann dabei bekannt und als biobasierte thermoplastische Kunststoffe beziehungsweise bioabbaubare thermoplastische Kunststoffe kommerziell erhältlich. Bevorzugt ist entsprechend ein erfindungsgemäßes Verfahren, wobei der thermoplastische Kunststoff ausgewählt ist aus der Gruppe bestehend aus biobasierten thermoplastischen Kunststoffen und bioabbaubaren thermoplastischen Kunststoffen, bevorzugt ausgewählt ist aus der Gruppe bestehend aus biobasiertem Polyethylenterephthalat, Polyethylenfuranoat, Polymilchsäure, Polybutylensuccinat und Mischungen dieser Kunststoffe.

In Verfahrensschritt d) des erfindungsgemäßen Verfahrens wird das flächige Kunststoffhalbzeug in einem Thermoformverfahren umgeformt, um die auf dem dreidimensionalen Trägerelement angeordneten dentalen Bauteile formschlüssig zu umfassen. Im Rahmen der vorliegenden Erfindung ist der Ausdruck "formschlüssig" dabei in Übereinstimmung mit dem fachmännischen Verständnis zu verstehen als "zumindest teilweise formschlüssig". Bevorzugt ist dabei in jedem Fall eine Ausgestaltung im Sinne von "überwiegend formschlüssig" und ganz besonders bevorzugt im Sinne von "im Wesentlichen vollständig formschlüssig". Der Fachmann versteht nämlich, dass das erfindungsgemäße Verfahren in der Praxis regelmäßig einen im Wesentlichen vollständigen Formschluss auf der von der Auflageseite abgewandten Seite der dentalen Bauteile und in den Umfassungsbereichen ergeben wird, dass dabei jedoch beispielsweise fertigungsbedingte kleine Abweichungen von einem perfekten Formschluss und/oder durch zusätzliche Maßnahmen bewusst erzeugte Abweichungen von einem perfekten Formschluss auftreten können.

Das Grundkonzept von Thermoformverfahren ist dem Fachmann ausgehend von seinem allgemeinen Fachwissen gut vertraut und geeignete Vorrichtungen zur Durchführung des Thermoformverfahrens sind von verschiedenen Anbietern kommerziell erhältlich. Das Konzept des Thermoformens, welches vom Fachmann zuweilen auch als Warmformen bzw. wegen seiner oberflächlichen Ähnlichkeit zum entsprechenden Metallverarbeitungsverfahren als Tiefziehen bezeichnet wird, basiert darauf, dass das eingesetzte flächige Kunststoffhalbzeug durch eine Temperaturerhöhung formbar gemacht und auf das dentale Bauteil aufgebracht wird, wobei zum Erhalt einer möglichst formschlüssigen Umfassung zumeist mit Über- und/oder Unterdrücken gearbeitet wird. In Übereinstimmung mit dem fachmännischen Verständnis wird dabei regelmäßig auf der Seite des flächigen Kunststoffhalbzeuges, auf der das zu umfassende Objekt angeordnet ist, ein Unterdruck erzeugt, welcher optional mit einem angelegten Überdruck auf der anderen Seite des flächigen Kunststoffhalbzeuges kombiniert wird, sodass die formbare Kunststoffmasse sich möglichst eng an die unterliegende Struktur anpasst. Es kann als Vorteil des erfindungsgemäßen Verfahrens gesehen werden, dass diese mit typischen Thermoformverfahren und kommerziell erhältlichen Thermoformvorrichtungen durchgeführt werden kann. Für im Wesentlichen alle Ausführungsformen relevant ist entsprechend auch ein erfindungsgemäßes Verfahren, wobei Verfahrensschritt d) mit einer Thermoformvorrichtung durchgeführt wird, und/oder wobei das Trägerelement mit dem auf der Auflageoberfläche angeordneten dentalen Bauteil in Verfahrensschritt d) in einer Thermoform angeordnet wird oder wobei das Trägerelement in Verfahrensschritt d) durch eine erhabene Trägerstruktur einer Thermoform gebildet wird, wobei die Thermoform bevorzugt eine oder mehrere Fluidauslässe umfasst, wobei der eine oder die mehreren Fluidauslässe besonders bevorzugt fluidleitend mit einer Pumpenanordnung verbunden sind. Bevorzugt ist ein erfindungsgemäßes Verfahren, wobei das Umformen durch einen auf einer Seite des flächigen Kunststoffhalbzeuges herrschenden Unterdruck und/oder einen auf einer Seite des flächigen Kunststoffhalbzeuges herrschenden Überdruck befördert oder bewirkt wird, bevorzugt durch einen auf einer Seite des flächigen Kunststoffhalbzeuges herrschenden Unterdruck und einen auf der anderen Seite des flächigen Kunststoffhalbzeuges herrschenden Überdruck.

Die optimale Temperatur für das Thermoformverfahren wird in der praktischen Umsetzung regelmäßig von der Art des thermoplastischen Kunststoffes sowie der gewählten Stärke des flächigen Kunststoffhalbzeuges abhängen. Insoweit ist es den Erfindern jedoch gelungen, optimierte Temperaturbereiche zu identifizieren, mit denen sich bei Einsatz üblicher Stärken von flächigen Kunststoffhalbzeugen, insbesondere im Bereich von 0,4 bis 1,2 mm, bevorzugt im Bereich von 0,5 bis 0,8 mm, und für die üblicherweise eingesetzten thermoplastischen Kunststoffe, insbesondere für Polyester, bevorzugt für Copolyester, im erfindungsgemäßen Verfahren Verpackungssysteme mit besonders vorteilhaften Handhabungseigenschaften erhalten lassen. Bevorzugt ist nämlich ein erfindungsgemäßes Verfahren, wobei das flächige Kunststoffhalbzeug beim Umformen eine Temperatur im Bereich von 100 bis 200 °C, bevorzugt im Bereich von 140 bis 200 °C, besonders bevorzugt im Bereich von 160 bis 200 °C, aufweist.

In Verfahrensschritt e) wird die Kunststoffstruktur mit dem darin verpackten dentalen Bauteil von dem Trägerelement separiert, welches anschließend beispielsweise erneut im erfindungsgemäßen Verfahren als Trägerelement eingesetzt werden kann. Da ein Teil der Oberfläche der Auflageseite der dentalen Bauteile während des Thermoformens durch das dreidimensionale Trägerelement bedeckt war und entsprechend in Verfahrensschritt d) nicht umfasst werden konnte liegt dieser Teil der verpackten dentalen Bauteile im Verpackungssystem nach dem Entfernen des Trägerelementes frei. Die Erfinder erachten es als vorteilhaft, wenn das Trägerelement derart fest mit der eingesetzten Thermoform verbunden ist, dass das Separieren dadurch erreicht werden kann, dass die thermogeformte Kunststoffstruktur zusammen mit den dentalen Bauteilen aus der Thermoform entnommen wird. Bevorzugt ist demgemäß ein erfindungsgemäßes Verfahren, wobei das Separieren in Verfahrensschritt e) durch Auslösen der Kunststoffstruktur aus einer Thermoform erfolgt.

Je nach Ausgestaltung der Thermoform kann die erhaltene Kunststoffstruktur zur Verringerung des Platzbedarfs und/oder zur Anpassung der Kontur anschließend zugeschnitten werden, wodurch sich insbesondere die Handhabbarkeit während Lagerung und Transport verbessern und der Platzbedarf minimieren lässt. Bevorzugt ist hierfür ein erfindungsgemäßes Verfahren, zusätzlich umfassend den Verfahrensschritt:
f) Vereinzeln eines Teilbereichs des Verpackungssystems, wobei der Teilbereich das in einem Teil der Kunststoffstruktur verpackte dentale Bauteil umfasst,
wobei das Vereinzeln bevorzugt durch ein Trennverfahren erfolgt, bevorzugt durch Schneiden oder Stanzen.

Nach Einschätzung der Erfinder ist ein weiterer Vorteil darin zu sehen, dass an der erhaltenen Kunststoffstruktur besonders leicht Kennzeichnungen, wie beispielsweise Marken oder Verwendungshinweise, angebracht werden können. Bevorzugt ist zu diesem Zweck ein erfindungsgemäßes Verfahren, zusätzlich umfassend den Verfahrensschritt:
g) Anbringen einer Kennzeichnung an dem Verpackungssystem, insbesondere der Kunststoffstruktur, oder an einem Teilbereich des Verpackungssystems,
wobei das Anbringen der Kennzeichnung bevorzugt mit einem Verfahren erfolgt, welches ausgewählt ist aus der Gruppe bestehend aus Lasergravurverfahren und Druckverfahren, besonders bevorzugt ausgewählt ist aus der Gruppe bestehend aus Lasergravurverfahren und 3D-Druckverfahren.

Zusätzlich oder alternativ zu der vorstehend beschriebenen Kennzeichnung kann auf der Rückseite der Verpackungssysteme ein Label angebracht werden, welches beispielsweise zusätzliche Informationen über die verpackten dentalen Bauteile enthalten kann, welches darüber hinaus jedoch auch als Kontrastfläche fungieren kann, vor deren Hintergrund die dentalen Bauteile besonders gut hinsichtlich ihrer optischen Eigenschaften bewertet werden können, was insbesondere bei der Verpackung von künstlichen Zähnen als vorteilhaft angesehen wird. Bevorzugt ist entsprechend ein erfindungsgemäßes Verfahren, zusätzlich umfassend den Verfahrensschritt:
h) Anbringen eines Labels, insbesondere aus Papier oder Karton, auf der vollständig durch die Kunststoffstruktur gebildeten Seite des Verpackungssystems.

Der Fachmann versteht, dass die Erfindung auch im Zusammenhang mit einem entsprechenden Verpackungssystem (nicht beansprucht) steht, welches mit dem erfindungsgemäßen Verfahren erhalten werden kann. Offenbart wird somit auch ein Verpackungssystem, bevorzugt hergestellt oder herstellbar mit dem erfindungsgemäßen Verfahren zur Verpackung dentaler Bauteile, umfassend:
i) eine Kunststoffstruktur mit zumindest einer Aufnahmevertiefung, und
ii) zumindest ein dentales Bauteil,

wobei das dentale Bauteil mit einer Einlegeseite formschlüssig in der Aufnahmevertiefung angeordnet ist, wobei das in der Aufnahmevertiefung angeordnete dentale Bauteil in zumindest einem Umfassungsbereich auf einer der Einlegeseite gegenüberliegenden Präsentationsseite formschlüssig von der Kunststoffstruktur bedeckt ist,
wobei das Verpackungssystem dazu eingerichtet ist, dass das dentale Bauteil unter Anwendung einer zumindest teilweise reversiblen Deformation der Kunststoffstruktur reversibel und zerstörungsfrei aus der Aufnahmevertiefung entnommen und wieder in die Aufnahmevertiefung eingesetzt werden kann.

Das Verpackungssystem umfasst eine Kunststoffstruktur mit zumindest einer Aufnahmevertiefung, die -wie vorstehend offenbart- durch das Umformen eines flächigen Kunststoffhalbzeuges um ein auf einem dreidimensionalen Trägerelement angeordnetes dentales Bauteil herum erhalten werden kann. Darüber hinaus umfasst das Verpackungssystem das in der Kunststoffstruktur verpackte dentale Bauteil, welches unmittelbar nach dem Verfahren formschlüssig in der Aufnahmevertiefung angeordnet und an zumindest einer Seite im Umfassungsbereich auch an der Oberfläche von der Kunststoffstruktur bedeckt ist. Die Seite des dentalen Bauteils, welche in diesem Zustand vollflächig von der Kunststoffstruktur bedeckt ist, wird dabei vorliegend als Einlegeseite bezeichnet. Die gegenüberliegende Seite ist nur teilweise von der Kunststoffstruktur bedeckt wobei das dentale Bauteil an der Stelle, die während des Thermoformens vom dreidimensionalen Trägerelement bedeckt war, offen liegt. Vor diesem Hintergrund wird die in diese Richtung weisende Seite des dentalen Bauteils auch als Präsentationsseite bezeichnet, wobei der Fachmann versteht, dass die Präsentationsseite des dentalen Bauteils im erfindungsgemäßen Verpackungssystem der Auflageseite des dentalen Bauteils im erfindungsgemäßen Verfahren entspricht.

Durch diese Ausgestaltung ist das Verpackungssystem dazu eingerichtet, dass die darin verpackten dentalen Bauteile reversibel und zerstörungsfrei aus der Aufnahmevertiefung entnommen und anschließend wieder in die Aufnahmevertiefung eingesetzt werden können, um diese dadurch wieder in der Kunststoffstruktur zu fixieren. Dabei ist das Verpackungssystem dazu eingerichtet, dass die Entnahme beziehungsweise das Einsetzen der dentalen Bauteile so erfolgt, dass die Kunststoffstruktur zumindest teilweise reversibel deformiert wird. Die Notwendigkeit einer solchen Deformation bei der Entnahme beziehungsweise beim Einsetzen des dentalen Bauteils ergibt sich dabei aus der formschlüssigen Bedeckung der Präsentationsseite durch die Kunststoffstruktur in den Umfassungsbereichen.

Die spezifische Ausgestaltung der Kunststoffstruktur, wie sie durch das Thermoformverfahren zu erhalten ist und der Einsatz eines thermoplastischen Kunststoffes zur Ausbildung der Kunststoffstruktur bedingen dabei, dass auch diese Deformation der Kunststoffstruktur zumindest teilweise reversibel ist. Der Fachmann versteht dabei, dass die Deformation bevorzugt überwiegend, besonders bevorzugt im Wesentlichen vollständig, reversibel ist, sodass die durch das Thermoformen aufgeprägte Kunststoffstruktur auch bei mehrmaliger Entnahme der dentalen Bauteile im Wesentlichen unverändert erhalten bleibt.

Der Fachmann versteht insoweit jedoch, dass eine mechanische Deformation eines dünnen thermoplastischen Kunststoffs in der Praxis immer mit zumindest geringen irreversiblen Anteilen der Deformation verbunden sein kann, zumindest auf molekularer Ebene, wobei diese nach Einschätzung der Erfinder in der Praxis kaum spürbar sein dürften. Die zumindest teilweise reversible Deformation wird dabei insbesondere durch die strukturelle Ausgestaltung der Kunststoffstruktur, welche aus einem vergleichsweise dünnen flächigen Kunststoffhalbzeug erzeugt wurde, sowie optional durch den Einsatz von thermoplastischen Elastomeren als thermoplastischem Kunststoff bewirkt.

Aus den Verpackungssystemen können die dentalen Bauteile beispielsweise händisch oder unter Einsatz eines Entnahmewerkzeuges, beispielsweise einer Pinzette entnommen werden, wobei es insbesondere möglich ist, dass die Kunststoffstruktur dabei händisch deformiert und/oder das dentale Bauteil unter Anwendung einer Hebelwirkung mit einem Werkzeug aus den Aufnahmevertiefungen herausgehebelt wird.

Bevorzugte Verpackungssysteme werden mit bevorzugten erfindungsgemäßen Verfahren hergestellt.

Bevorzugt ist entsprechend ein Verpackungssystem, wobei das Verpackungssystem zwei oder mehr, bevorzugt vier oder mehr, besonders bevorzugt sechs oder mehr, ganz besonders bevorzugt acht oder mehr, insbesondere bevorzugt sechs bis acht, dentale Bauteile umfasst, und wobei die Kunststoffstruktur zwei oder mehr, bevorzugt vier oder mehr, besonders bevorzugt sechs oder mehr, ganz besonders bevorzugt acht oder mehr, insbesondere bevorzugt sechs bis acht, Aufnahmevertiefungen umfasst, wobei das Verpackungssystem bevorzugt für jedes dentale Bauteil eine Aufnahmevertiefung umfasst.

Bevorzugt ist zusätzlich oder alternativ ebenfalls ein Verpackungssystem, wobei das dentale Bauteil ausgewählt ist aus der Gruppe bestehend aus Fräsblöcken, dentalen Prothesen und künstlichen Zähnen, bevorzugt ausgewählt ist aus der Gruppe bestehend aus künstlichen Zähnen.

Bevorzugt ist zusätzlich oder alternativ zudem ein Verpackungssystem, wobei das dentale Bauteil ein künstlicher Zahn ist, wobei die Präsentationsseite die Labial-/Bukkalseite des künstlichen Zahnes ist.

Bevorzugt ist zusätzlich oder alternativ gleichfalls ein Verpackungssystem, wobei das in der Aufnahmevertiefung angeordnete dentale Bauteil zumindest in einem ersten Umfassungsbereich und einem zweiten Umfassungsbereich auf einer der Einlegeseite gegenüberliegenden Präsentationsseite von der Kunststoffstruktur bedeckt ist.

Bevorzugt ist zusätzlich oder alternativ darüber hinaus ein Verpackungssystem, wobei die Kunststoffstruktur zu 90 % oder mehr, bevorzugt zu 95 % oder mehr, besonders bevorzugt zu 98% oder mehr, ganz besonders bevorzugt im Wesentlichen vollständig, aus dem thermoplastischen Kunststoff besteht, bezogen auf die Masse der Kunststoffstruktur.

Bevorzugt ist zusätzlich oder alternativ gleichfalls ein Verpackungssystem, wobei das Verpackungssystem eine Kennzeichnung, bevorzugt eine Bedruckung oder Gravur, und/oder ein auf der vollständig durch die Kunststoffstruktur gebildeten Seite angebrachtes Label umfasst.

Bevorzugt ist zusätzlich oder alternativ zudem ein Verpackungssystem, wobei das Verpackungssystem keine Mittel zur stoffschlüssigen Verbindung des dentalen Bauteils mit der Kunststoffstruktur umfasst, insbesondere keine Klebemassen oder Wachse.

Im Lichte der vorstehenden Ausführungen wird nachfolgend ein besonders bevorzugtes erfindungsgemäßes Verfahren offenbart, welches in den Augen der Erfinder auch in Kombination mit weiteren bevorzugten Merkmalen besonders vorteilhaft ist. Besonders bevorzugt ist ein erfindungsgemäßes Verfahren, umfassend die Verfahrensschritte:
aa) Herstellen oder Bereitstellen von sechs oder mehr künstlichen Zähnen, bevorzugt sechs oder acht künstlichen Zähnen,
bb) Anordnen der künstlichen Zähne mit einer Auflageseite auf einer Auflageoberfläche eines dreidimensionalen Trägerelements, wobei die Auflageseite bevorzugt die Labial-/Bukkalseite der künstlichen Zähne ist, wobei das Anordnen so erfolgt, dass die künstlichen Zähne jeweils unter Ausbildung eines ersten Umfassungsbereichs an einer ersten Seite und unter Ausbildung eines zweiten Umfassungsbereichs an einer zweiten Seite über den Rand der Auflageoberfläche hinaus ragen,
cc) Herstellen oder Bereitstellen eines flächigen Kunststoffhalbzeuges, umfassend einen thermoplastischen Kunststoff,
dd) Umformen des flächigen Kunststoffhalbzeuges in einem Thermoformverfahren zur formschlüssigen Umfassung der künstlichen Zähne in einer Kunststoffstruktur, wobei das Umformen so erfolgt, dass die künstlichen Zähne im ersten Umfassungsbereich und im zweiten Umfassungsbereich an der Auflageseite der künstlichen Zähne formschlüssig von der Kunststoffstruktur umgeben werden, und
ee) Separieren der abschnittsweise von der Kunststoffstruktur umgebenen künstlichen Zähne von dem Trägerelement, zum Erhalt eines Verpackungssystems, wobei das Verpackungssystem sechs oder mehr, ganz besonders bevorzugt acht oder mehr in der Kunststoffstruktur verpackte künstliche Zähne umfasst.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung der Verfahrensschritte des erfindungsgemäßen Verfahrens in einer bevorzugten Ausführungsform;
- Fig. 2: eine schematische Darstellung eines in einer Thermoform angeordneten dreidimensionalen Trägerelements;
- Fig. 3: die Anordnung der Fig. 2 mit darauf angeordneten dentalen Bauteilen;
- Fig. 4: die Anordnung der Fig. 3, welche mittels Thermoformen mit einer Kunststoffstruktur überzogen wurde; und
- Fig. 5: eine schematische Darstellung eines Verpackungssystems, welches ausgehend von der Anordnung der Fig. 4 erhalten wurde.

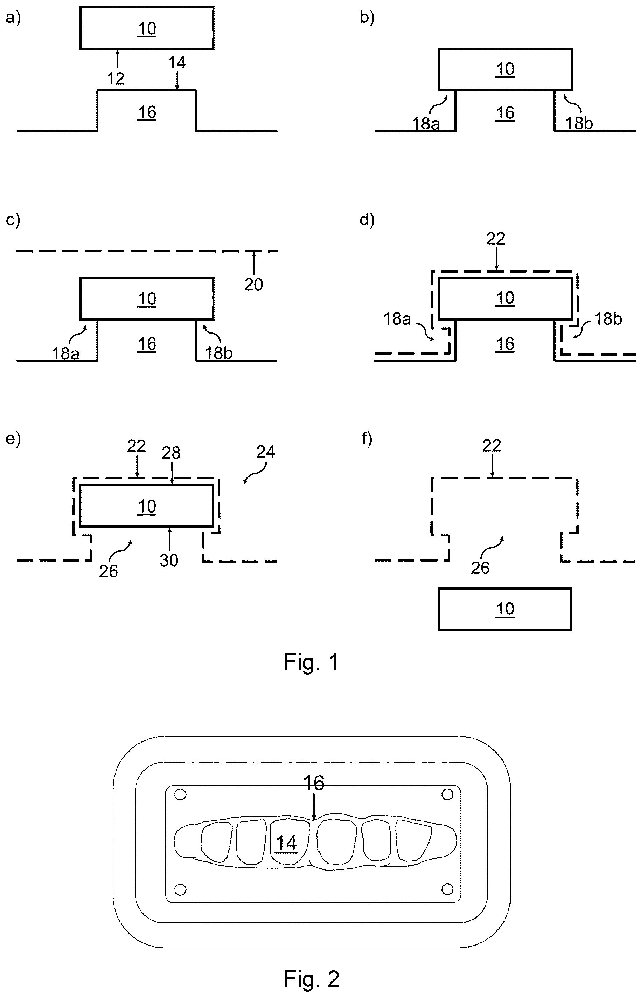

Fig.1 zeigt eine stark vereinfachte schematische Darstellung des erfindungsgemäßen Verfahrens zur Verpackung dentaler Bauteile 10.

In Fig. 1a) ist gezeigt, wie ein als Kasten abstrahiertes dentales Bauteil 10 mit der Auflageseite 12 auf der Auflageoberfläche 14 eines dreidimensionalen Trägerelements 16 angeordnet wird, welches sich über die umliegende Bodenfläche erhebt. Die resultierende Anordnung ist in Fig. 1b) gezeigt, wobei die Umfassungsbereiche 18a, 18b kenntlich gemacht sind, die sich dadurch ergeben, dass das dentale Bauteil 10 an zwei Seiten über den Rand der Auflageoberfläche 14 hinausragt. In Fig. 1c) ist nunmehr angedeutet, wie ein flächiges Kunststoffhalbzeug 20 bereitgestellt wird, wohingegen Fig. 1d) den Zustand zeigt, welcher sich nach dem Umformen dieses flächigen Kunststoffhalbzeuges 20 ergibt. In Figur 1d) ist klar zu erkennen, wie sich das zuvor flächige Kunststoffhalbzeug 20 nunmehr als Kunststoffstruktur 22 im Wesentlichen vollständig formschlüssig um das dentale Bauteil 10 sowie um die Seitenflächen des dreidimensionalen Trägerelements 16 herum fügt.

Nach dem Erstarren der derart mittels Thermoformen ausgeformten Kunststoffstruktur 22 kann das resultierende Verpackungssystem 24 erhalten werden, indem die Kunststoffstruktur 22 zusammen mit dem darin eingebetteten dentalen Bauteil 10 von dem Trägerelement 16 abgehoben wird. In Fig. 1e) ist dabei die teilweise freiliegende Präsentationsseite 30 und die gegenüberliegende Einlegeseite 28, mit der das dentale Bauteil 10 in der verfahrensbedingt hergestellten Aufnahmevertiefung 26 einliegt, kenntlich gemacht. Fig. 1f) visualisiert schematisch die Entnahme des dentalen Bauteils 10 aus der in der Kunststoffstruktur 22 erzeugten Aufnahmevertiefung 26, wobei durch die schematische Darstellung ersichtlich ist, dass die zur Entnahme notwendige Deformation der Kunststoffstruktur 22 im Wesentlichen vollständig reversibel erfolgt ist, sodass das dentale Bauteil 10 reversibel und zerstörungsfrei aus der Aufnahmevertiefung 26 entnommen wurde und bei Bedarf wieder in die Aufnahmevertiefung 26 eingesetzt werden kann.

Die Fig. 2 bis 5 visualisieren die Durchführung des erfindungsgemäßen Verfahrens in einer besonders bevorzugten Ausführungsform anhand eines praktischen Beispiels, wobei die Figuren abstrahierte zeichnerische Umsetzungen realer Fotos darstellen, die während der Versuche der Erfinder aufgenommen wurden.

Fig. 2 visualisiert schematisch den Blick in die Thermoform einer Thermoformvorrichtung, deren Bodenfläche von einer Seitenwand mit umlaufendem Rand umgeben ist und vier Öffnungen zum Anlegen eines Unterdruckes umfasst, wobei zentral auf der Bodenfläche ein dreidimensionales Trägerelement 16 angeordnet ist, welches als separates Trägerelement 16 ausgeführt und aus Kunststoff ausgebildet ist. Das Trägerelement 16 umfasst im gezeigten Beispiel sechs Aufnahmeplätze auf der Aufnahmeoberfläche 14 zur Aufnahme von insgesamt sechs künstlichen Zähnen, bei denen es sich im gezeigten Beispiel um Frontzähne handelt, die für die spätere Verwendung spezifisch als Set zusammengestellt wurden und zusammen verpackt werden sollen.

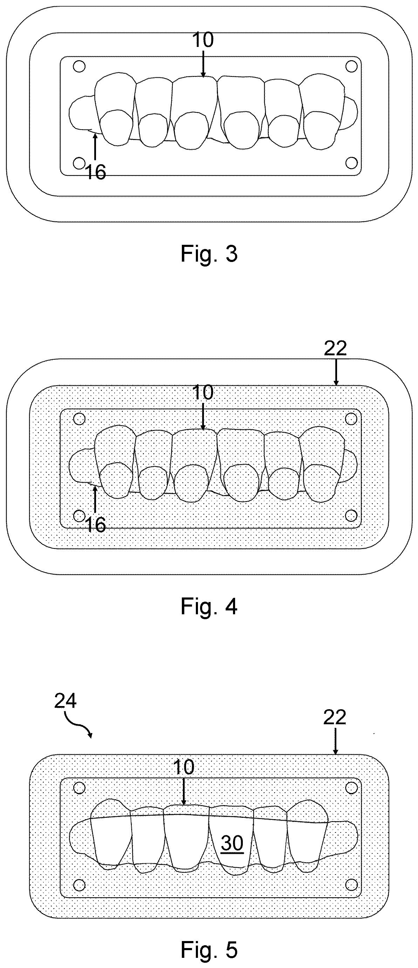

In Fig. 3 ist hierauf aufbauend visualisiert, wie als dentale Bauteile 10 insgesamt sechs künstliche Frontzähne mit der Labialseite nach unten auf der Auflageoberfläche 14 des Trägerelements 16 angeordnet sind. Die künstlichen Zähne ragen dabei an zwei gegenüberliegenden Seiten, d.h. oben und unten, über den Rand der Auflageoberfläche 14 hinaus, wobei die derart angeordneten dentalen Bauteile 10 in den ausgebildeten Umfassungsbereichen 18a, 18b zum umliegenden Boden der Thermoform jeweils einen Abstand von etwa 5 Millimeter aufweisen.

Die in Fig. 3 dargestellte Anordnung wurde anschließend in einem Thermoformverfahren in eine Kunststoffstruktur 22 eingefasst. Hierbei wurde im gezeigten Beispiel eine Kunststofffolie mit einer mittleren Dicke von etwa 0,6 mm eingesetzt, welche im Wesentlichen vollständig aus einem Copolyester (CAS: 261716-943) bestand. Das Thermoformen erfolgt dabei bei einer Temperatur im Bereich von 160 bis 200 °C, wodurch ein Verpackungssystem 24 erhalten werden konnte, das über besonders gute Handhabungseigenschaften und insbesondere eine besonders gute Entnahmefähigkeit der dentalen Bauteile 10 verfügt.

Die durch Thermoformen erhaltene Anordnung ist in Fig. 4 gezeigt, wobei durch die Schraffur angedeutet wird, dass die entsprechenden Bereiche gegenüber der Darstellung der Fig. 3 nunmehr mit einer Kunststoffschicht der Kunststoffstruktur 22 beschichtet sind.

Fig. 5 zeigt abschließend das Verpackungssystem 24, welches ausgehend von der Anordnung der Fig. 4 erhalten werden kann, wenn die Kunststoffstruktur 22 aus der Thermoform herausgehoben wird, sodass das Trägerelement in der Thermoform verbleibt. Der Blick der Fig. 5 ist dabei auf die Präsentationsseite der künstlichen Zähne gerichtet, d. h. auf die Seite der künstlichen Zähne, welche freiliegt, d.h. im gezeigten Beispiel die Labialseite. Das Verpackungssystem 24 der Fig. 5 umfasst entsprechend sechs Aufnahmevertiefungen 26 in der Kunststoffstruktur 22 sowie als dentale Bauteile 10 sechs korrespondierende künstliche Frontzähne, die jeweils mit ihrer Einlegeseite 28 formschlüssig in der Aufnahmevertiefung 26 angeordnet sind und dabei oben und unten in einem Umfassungsbereich 18a, 18b auch auf der der Einlegeseite 28 gegenüberliegenden Präsentationseite 30 im Wesentlichen vollständig formschlüssig von der Kunststoffstruktur 22 bedeckt sind, sodass diese durch die Kunststoffstruktur 22 fixiert werden. Die künstlichen Zähne können in dem resultierendem Verpackungssystem 24 reversibel und zerstörungsfrei aus den jeweiligen Aufnahmevertiefungen 26 entnommen und bei Bedarf wieder in die Aufnahmevertiefungen 26 eingesetzt werden, wobei es zu einer im Wesentlichen vollständigen reversiblen Deformation der Kunststoffstruktur 22 kommt.

### Bezugszeichenliste

- 10: Dentales Bauteil
- 12: Auflageseite
- 14: Auflageoberfläche
- 16: dreidimensionales Trägerelement
- 18a-b: Umfassungsbereich
- 20: flächiges Kunststoffhalbzeug
- 22: Kunststoffstruktur
- 24: Verpackungssystem
- 26: Aufnahmevertiefung
- 28: Einlegeseite
- 30: Präsentationsseite

## Patentansprüche

1. Verfahren zur Verpackung dentaler Bauteile (10), umfassend die Verfahrensschritte:
a) Herstellen oder Bereitstellen eines dentalen Bauteils (10),
b) Anordnen des dentalen Bauteils (10) mit einer Auflageseite (12) auf einer Auflageoberfläche (14) eines dreidimensionalen Trägerelements (16), wobei das Anordnen so erfolgt, dass das dentale Bauteil (10) unter Ausbildung eines Umfassungsbereichs (18a, 18b) an zumindest einer Seite über den Rand der Auflageoberfläche (14) hinausragt,
c) Herstellen oder Bereitstellen eines flächigen Kunststoffhalbzeuges (20), umfassend einen thermoplastischen Kunststoff,
d) Umformen des flächigen Kunststoffhalbzeuges (20) in einem Thermoformverfahren zur formschlüssigen Umfassung des dentalen Bauteils (10) in einer Kunststoffstruktur (22), wobei das Umformen so erfolgt, dass das dentale Bauteil (10) im Umfassungsbereich (18a, 18b) an der Auflageseite (12) des dentalen Bauteils (10) formschlüssig von der Kunststoffstruktur (22) umgeben wird, und
e) Separieren des abschnittsweise von der Kunststoffstruktur (22) umgebenen dentalen Bauteils (10) von dem Trägerelement (16), zum Erhalt eines Verpackungssystems (24), wobei das Verpackungssystem (24) das in der Kunststoffstruktur (22) verpackte dentale Bauteil (10) umfasst.

2. Verfahren nach Anspruch 1, wobei das dentale Bauteil (10) ausgewählt ist aus der Gruppe bestehend aus Fräsblöcken, dentalen Prothesen, künstlichen Zähnen und dentalen Formkörpern.

3. Verfahren nach Anspruch 2, wobei das dentale Bauteil (10) ein künstlicher Zahn ist, wobei die Auflageseite (12) die Labial-/Bukkalseite des künstlichen Zahnes ist.

4. Verfahren nach einem der Ansprüche 1 bis 3, wobei das Verfahren gleichzeitig für zwei oder mehr dentale Bauteile (10) durchgeführt wird, wobei das Verpackungssystem (24) zwei oder mehr verpackte dentale Bauteile (10) umfasst.

5. Verfahren nach einem der Ansprüche 1 bis 4, wobei das Anordnen so erfolgt, dass das dentale Bauteil (10) unter Ausbildung eines ersten Umfassungsbereichs (18a) an einer ersten Seite und unter Ausbildung eines zweiten Umfassungsbereichs (18b) an einer zweiten Seite über den Rand der Auflageoberfläche (14) hinaus ragt.

6. Verfahren nach einem der Ansprüche 1 bis 5, wobei der thermoplastische Kunststoff ausgewählt ist aus der Gruppe bestehend aus biobasierten thermoplastischen Kunststoffen und bioabbaubaren thermoplastischen Kunststoffen.

7. Verfahren nach einem der Ansprüche 1 bis 6, wobei das flächige Kunststoffhalbzeug (20) beim Umformen eine Temperatur im Bereich von 100 bis 200 °C aufweist.

8. Verfahren nach einem der Ansprüche 1 bis 7, zusätzlich umfassend den Verfahrensschritt:
f) Vereinzeln eines Teilbereichs des Verpackungssystems (24), wobei der Teilbereich das in einem Teil der Kunststoffstruktur (22) verpackte dentale Bauteil (10) umfasst.

9. Verfahren nach einem der Ansprüche 1 bis 8, zusätzlich umfassend den Verfahrensschritt:
g) Anbringen einer Kennzeichnung an dem Verpackungssystem (24) oder an einem Teilbereich des Verpackungssystems (24).

## Claims

1. Method for packaging dental components (10), comprising the method steps:
a) producing or providing a dental component (10),
b) arranging the dental component (10) with a support side (12) on a support surface (14) of a three-dimensional carrier element (16), wherein the arrangement is carried out in such a manner that the dental component (10) projects beyond the edge of the support surface (14) on at least one side, forming a peripheral area (18a, 18b),
c) producing or providing a sheet-like plastic semi-finished product (20) comprising a thermoplastic resin,
d) forming the sheet-like plastic semi-finished product (20) in a thermoforming process for form closure of the dental component (10) in a plastic structure (22), wherein the forming is carried out in such a manner that the dental component (10) is surrounded in a form closure by the plastic structure (22) in the peripheral area (18a, 18b) on the support side (12) of the dental component (10), and
e) separating the dental component (10) partially surrounded by the plastic structure (22) from the carrier element (16) to obtain a packaging system (24), wherein the packaging system (24) comprises the dental component (10) packaged in the plastic structure (22).

2. Method according to claim 1, wherein the dental component (10) is selected from the group consisting of milling blocks, dental prostheses, artificial teeth, and dental moldings.

3. Method according to claim 2, wherein the dental component (10) is an artificial tooth, wherein the support side (12) is the labial/buccal side of the artificial tooth.

4. Method according to any of claims 1 to 3, wherein the method is performed simultaneously for two or more dental components (10), wherein the packaging system (24) comprises two or more packaged dental components (10).

5. Method according to any of claims 1 to 4, wherein the arrangement is such that the dental component (10) protrudes beyond the edge of the support surface (14) forming a first peripheral area (18a) on a first side and forming a second peripheral area (18b) on a second side.

6. Method according to any of claims 1 to 5, wherein the thermoplastic resin is selected from the group consisting of biobased thermoplastic resins and biodegradable thermoplastic resins.

7. Method according to any of claims 1 to 6, wherein the sheet-like plastic semi-finished product (20) has a temperature in the region of 100 to 200 °C during forming.

8. Method according to any of claims 1 to 7, further comprising the method step:
f) separating a partial area of the packaging system (24), wherein the partial area comprises the dental component (10) packaged in a portion of the plastic structure (22).

9. Method according to any of claims 1 to 8, further comprising the method step:
g) applying a marking to the packaging system (24) or to a partial area of the packaging system (24).

## Revendications

1. Procédé d'emballage de composants dentaires (10) comprenant les étapes :
a) fabrication et fourniture d'un composant dentaire (10),
b) agencement dudit composant dentaire (10) avec un côté d'appui (12) sur une surface d'appui (14) d'un élément de support tridimensionnel (16), ledit agencement s'effectuant de telle sorte que ledit composant dentaire (10) dépasse en saillie du bord de la surface d'appui (14) sur au moins un côté en formant une zone de périphérie (18a, 18b),
c) fabrication ou fourniture d'un produit semi-fini plat en matière plastique (20), comprenant une matière thermoplastique,
d) mise en forme du produit semi-fini en matière plastique (20) dans un procédé de thermoformage pour entourer par complémentarité de forme le composant dentaire (10) dans une structure en matière plastique (22), ladite mise en forme s'effectuant de telle sorte que le composant dentaire (10) est, dans la zone de périphérie (18a, 18b) et sur le côté d'appui (12) du composant dentaire (10), entourée par complémentarité de forme par la structure en matière plastique (22), et
e) détachement du composant dentaire (10), entouré partiellement de la structure en matière plastique (22), de l'élément de support (16) pour obtenir un système d'emballage (24), ledit système d'emballage (24) comprenant le composant dentaire (10) emballé dans la structure en matière plastique (22).

2. Procédé selon la revendication 1, le composant dentaire (10) étant sélectionné à partir d'un groupe constitué de blocs de fraisage, prothèses dentaires, dents artificielles et corps moulés dentaires.

3. Procédé selon la revendication 2, le composant dentaire (10) étant une dent artificielle, le côté d'appui (12) étant la face labiale/buccale de la dent artificielle.

4. Procédé selon l'une quelconque des revendications 1 à 3, le procédé étant réalisé simultanément pour deux composants dentaires (10) ou plus, le système d'emballage (24) comprenant deux composants dentaires (10) emballés ou plus.

5. Procédé selon l'une quelconque des revendications 1 à 4, l'agencement s'effectuant de telle sorte que le composant dentaire (10) dépasse en saillie du bord de la surface d'appui (14) en formant une première zone de périphérie (18a) sur un premier côté et en formant une deuxième zone de périphérie (18b) sur un deuxième côté.

6. Procédé selon l'une quelconque des revendications 1 à 5, la matière thermoplastique étant sélectionnée à partir d'un groupe constitué de matières thermoplastiques biosourcées et de matières thermoplastiques biodégradables.

7. Procédé selon l'une quelconque des revendications 1 à 6, le produit semi-fini plat en matière plastique (20) présentant une température comprise entre 100 et 200 °C au moment de la mise en forme.

8. Procédé selon l'une quelconque des revendications 1 à 7, comprenant en plus l'étape :
f) individualisation d'une zone partielle du système d'emballage (24), la zone partielle comprenant le composant dentaire (10) emballé dans une partie de la structure en matière plastique (22).

9. Procédé selon l'une quelconque des revendications 1 à 8, comprenant en plus l'étape :
g) application d'un marquage sur le système d'emballage (24) ou sur une zone partielle du système d'emballage (24).
